# EUROPÄISCHE PATENTSCHRIFT

(11) **EP 3 433 583 B1**
(45) Veröffentlichungstag und Bekanntmachung des Hinweises auf die Patenterteilung: **25.12.2019**
(21) Anmeldenummer: 17713188.5
(22) Anmeldetag: 14.03.2017
(51) Int. Cl.: G01D 7/00, G01D 21/00

(54) **FELDGERÄT DER AUTOMATISIERUNGSTECHNIK**
AUTOMATION FIELD DEVICE
APPAREIL DE TERRAIN DE LA TECHNIQUE DE L'AUTOMATISATION

(30) Priorität: 21.03.2016 DE 102016105195
(43) Veröffentlichungstag der Anmeldung: 30.01.2019
(73) Patentinhaber: Endress+Hauser SE+Co. KG, 79689 Maulburg (DE)
(72) Erfinder: SCHÄUBLE, Harald, 79541 Lörrach (DE); PAUL, Tobias, 79650 Schopfheim (DE); MONSE, Benjamin, 79235 Vogtsburg (DE); UPPENKAMP, Kaj, 79664 Wehr (DE)
(74) Vertreter: Andres, Angelika Maria
(86) Internationale Anmeldenummer: PCT/EP2017/055981
(87) Internationale Veröffentlichungsnummer: WO 2017/162483

(56) Entgegenhaltungen:
- EP-A1- 2 642 185
- WO-A1-2015/154819
- DE-A1-102005 025 670
- US-A1- 2008 013 301
- US-A1- 2013 147 367

## Beschreibung

Die Erfindung bezieht sich auf ein Feldgerät der Automatisierungstechnik sowie ein Verfahren zum Ansteuern eines ersten Leuchtmittels als visuelle Statusanzeige eines Feldgerätes.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massendurchflussmessgeräte, Druck- und Temperaturmessgeräte, pH-Redoxpotential-Messgeräte, Leitfähigkeitsmessgeräte etc., die als Sensoren die entsprechenden Prozessvariablen Füllstand, Durchfluss, Druck, Temperatur, pH-Wert bzw. Leitfähigkeitswert erfassen.

Zur Beeinflussung von Prozessvariablen dienen so genannte Aktoren, z. B. Ventile, die den Durchfluss einer Flüssigkeit in einem Rohrleitungsabschnitt steuern.

Eine Vielzahl derartiger Feldgeräte wird von der Fa. Endress + Hauser hergestellt und vertrieben.

Häufig sind Feldgeräte über eine 4-20mA-Stromschleife mit übergeordneten Einheiten verbunden. Diese übergeordneten Einheiten können zur Prozesssteuerung, Prozessvisualisierung oder Prozessüberwachung dienen. Eine Vielzahl der heutigen im Einsatz befindlichen Feldgeräte sind Zweidraht- bzw. Vierdraht- Geräte. Zweileitergeräte sind über ein Leitungspaar mit einer Empfängereinheit, die als übergeordnete Einheit dient, verbunden. Diese Geräte werden ausschließlich über die Signalleitung mit Strom versorgt. Der Strom, der über die Signalleitung fließt, dient zur Signalübertragung zwischen dem Feldgerät und der Empfängereinheit. Ein industrieller Standard für diese Art der Signalübertragung ist die 4-20 mA Technik.

Bei Zweileitergeräten ist die zur Verfügung stehende Eingangsleistung erheblich beschränkt. Die Elektronik im Feldgerät muss so ausgelegt sein, dass sie auch bei einem minimalen Signalstrom von 4mA noch zuverlässig arbeitet. In der Regel ist ein Mikroprozessor in der Elektronik vorhanden, der zur Messwertverarbeitung dient. Die geringe zur Verfügung stehende Eingangsleistung stellt insbesondere auch bei der visuellen Statusanzeige eine beschränkende Größe dar. Zwar soll die Statusanzeige auf der einen Seite möglichst hell leuchten, allerdings steht eben nur eine begrenzte Eingangsleistung zur Verfügung. In den Dokumenten WO 2015/154819 und DE 10 2005 025 670 sind Feldgeräte mit einer Statusanzeige beschrieben.

Der Erfindung liegt daher die Aufgabe zugrunde, ein Feldgerät mit einer visuellen Statusanzeige bereitzustellen, welche zum einen eine erhöhte Sichtbarkeit und zum anderen einen geringeren Energiebedarf aufweist.

Die Aufgabe wird durch ein Feldgerät gemäß dem unabhängigen Patentanspruch 1 und einem Verfahren gemäß des unabhängigen Patentanspruchs 11 gelöst.

Vorteilhafte Ausführungsformen ergeben sich aus den jeweiligen abhängigen Ansprüchen.

Erfindungsgemäß wird eine visuelle Statusanzeige eines Feldgerätes in Form eines ersten Leuchtmittels derartig realisiert, dass dieses über ein zweites Leuchtmittel, welches einen geringen Energiebedarf benötigt, zum Leuchten angeregt wird. Der Energiebedarf wird weiter reduziert, indem das zweite Leuchtmittel mit einer bestimmten Frequenz elektrisch zum Leuchten bzw. Blinken angeregt wird. Das Anregen des ersten Leuchtmittels führt dazu, dass dieses Leuchtmittel nachleuchtet, d.h. auch zu den Zeitpunkten leuchtet, in denen das zweite Leuchtmittel nicht elektrisch angeregt wird, umso ein für das menschliche Auge dauerhaftes Statussignal auf der Statusanzeige erscheinen zu lassen. Um die Sichtbarkeit der visuellen Statusanzeige weiter zu erhöhen, ist das erste Leuchtmittel flächig im bzw. innerhalb oder an dem Gehäuse des Feldgerätes angeordnet.

Eine vorteilhafte Ausgestaltung des Feldgerätes sieht vor, dass die Feldgeräteelektronik ferner dazu eingerichtet ist, das Signal einer Pulsweitenmodulation zu unterziehen, sodass das pulsbreitenmodulierte Signal mit der vorbestimmten Frequenz das zweite Leuchtmittel zum Leuchten anregt.

Eine vorteilhafte Ausgestaltung des Feldgerätes sieht vor, dass das erste Leuchtmittel innerhalb des Gehäuses, vorzugsweise in einem dem Gehäuse zugehörigen Gehäusedeckel, besonders bevorzugt an einer Glasfront des Gehäusedeckels, angeordnet ist.

Eine alternative Ausgestaltung des Feldgerätes sieht vor, dass das erste Leuchtmittel außerhalb des Gehäuses, vorzugsweise an einem dem Gehäuse zugehörigen Gehäusedeckel, besonders bevorzugt an einer Glasfront des Gehäusedeckels, angeordnet ist.

Eine weitere alternative Ausgestaltung des Feldgerätes sieht vor, dass das Gehäuse einen Gehäusedeckel mit einer Glasfront aufweist und die Glasfront derartig ausgestaltet ist, dass sie das erste Leuchtmittel aufweist.

Gemäß der Erfindung umfasst das erste Leuchtmittel zumindest eine Leuchtfolie oder einen Leuchtlack.

Eine vorteilhafte Ausgestaltung des Feldgerätes sieht vor, dass das zweite Leuchtmittel zumindest eine Leuchtdiode umfasst, die im sichtbaren Bereich oder anderen Wellenlängen, bspw. IR oder UV, abstrahlen kann.

Eine vorteilhafte Ausgestaltung des Feldgerätes sieht vor, dass das erste Leuchtmittel und das zweite Leuchtmittel ein Leuchtmittelpaar bildet, das Licht mit einer bestimmten Wellenlänge emittieren und wobei mehrere, vorzugsweise drei, Leuchtmittelpaare vorgesehen sind, die Licht mit jeweils unterschiedlicher Wellenlänge emittieren.

Eine vorteilhafte Ausgestaltung des Feldgerätes sieht vor, dass die ersten Leuchtmittel nebeneinander angeordnet sind.

Eine hierzu alternative Ausgestaltung des Feldgerätes sieht vor, dass die ersten Leuchtmittel übereinander angeordnet sind.

Erfindungsgemäß wird ebenfalls ein Verfahren zum Ansteuern eines ersten Leuchtmittels als visuelle Statusanzeige eines Feldgerätes vorgeschlagen, wobei das Verfahren vorsieht, dass ein zweites Leuchtmittel, welches mit dem ersten Leuchtmittel in optischen Kontakt steht, mit einer vorbestimmten Frequenz angeregt wird, sodass das erste Leuchtmittel durch das zweite Leuchtmittel ebenfalls zum Leuchten angeregt wird.

Eine vorteilhafte Ausführungsform des erfindungsgemäßen Verfahrens sieht vor, dass das zweite Leuchtmittel über ein pulsbreitenmoduliertes Signal mit der vorbestimmten Frequenz angeregt wird.

Die Erfindung wird anhand der nachfolgenden Zeichnungen näher erläutert. Es zeigt:
Fig. 1: eine schematische Darstellung eines Feldgerätes, welches als Grenzschalter dient,
Fig. 2: eine exemplarische Darstellung eines Gehäusedeckels bei dem drei erste Leuchtmittel nebeneinander angeordnet sind, und
Fig. 3: eine exemplarische Darstellung eines Gehäusedeckels bei dem drei erste Leuchtmittel übereinander angeordnet sind.

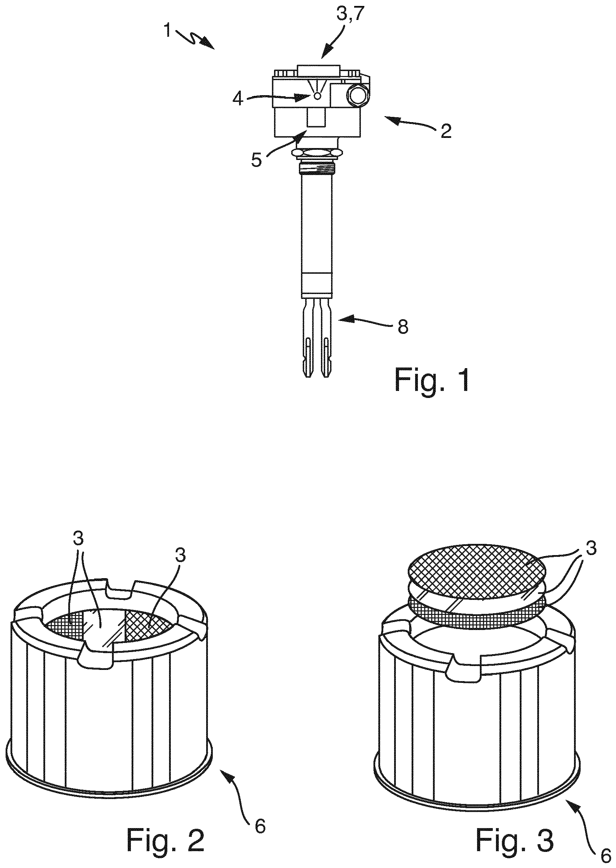

Figur 1 zeigt eine schematische Darstellung eines Feldgerätes 1, welches als Grenzschalter dient. Das Feldgerät 1 umfasst ein Gehäuse 2 an dem eine schwingfähige Einheit 8, bspw. in Form einer Schwinggabel, eines Einstabes oder einer Membran, welche teilweise in ein Medium eintaucht, angebracht ist.

Ferner umfasst das Feldgerät 1 eine visuelle Statusanzeige 3, welche Statusinformationen, bspw. in Form unterschiedlicher Farben, darstellt. Typischerweise sind die Statusinformationen derartig kodiert, dass in dem Fall, dass die Statusanzeige grün aufleuchtet, dies bedeutete, dass die schwingfähige Einheit nicht mit Flüssigkeit bedeckt ist, in dem Fall, das die Statusanzeige gelb aufleuchtet, die schwingfähige Einheit mit Flüssigkeit bedeckt ist und in dem Fall, dass die Statusanzeige rot aufleuchtet, das Feldgerät 1 eine technische Störung aufweist.

Derartige Statusanzeigen 3 sollen idealerweise auch aus einer großen Entfernung zuverlässig erkennbar sein. Gleichzeitig dürfen diese keinen zu großen Energiebedarf aufweisen, da ein Feldgerät 1 den eingangs erwähnten Beschränkungen hinsichtlich der zur Verfügung stehenden Energie unterliegt.

Erfindungsgemäß weist daher das Feldgerät 1 ein erstes Leuchtmittel 3 in Form einer Leuchtfolie oder eines Leuchtlackes auf. Leuchtfolien und -lacke sind aus dem Stand der Technik bekannt und weisen die Eigenschaft auf, dass sie, wenn sie beleuchtet werden, selbstständig zu leuchten anfangen.

Es handelt sich dabei um fluoreszierende oder phosphoreszierende Eigenschaften.

Das erste Leuchtmittel 3 ist dabei derartig am oder in dem Gehäuse des Feldgerätes 1 angeordnet, dass es gut sichtbar außerhalb des Gehäuses ist. Beispielsweise kann das erste Leuchtmittel 3 hinter einer Glasfront 7, d.h. auf der dem Gehäuseinneren zugewandten Seite der Glasfront 7 eines Gehäusedeckels 6 angebracht sein, sodass das erste Leuchtmittel 3 durch die Glasfront 7 von außerhalb des Gehäuses 2 gut sichtbar ist.

Alternativ kann das erste Leuchtmittel 3 auch auf der dem Gehäuseinneren abgewandten Seite einer Glasfront eines Gehäusedeckels, d.h. auf der äußeren Oberfläche des Gehäusedeckels 6 angebracht sein.

Eine weitere alternative kann vorsehen, dass eine Glasfront 7 eines Gehäusedeckels 6 selbst luminiszierende Eigenschaften aufweist, sodass die Glasfront an sich das erste Leuchtmittel bildet.

Dieses erste Leuchtmittel 3 wird mittels eines zweiten Leuchtmittels 4, bspw. in Form einer LED, angeleuchtet, sodass es ebenfalls zu leuchten anfängt. Das zweite Leuchtmittel 4 ist dabei derartig in dem Gehäuse 2 des Feldgerätes 1 angeordnet, dass es in optischen Kontakt, d.h. eine Hauptstrahlrichtung des zweiten Leuchtmittels 4 kann sich ungehindert von dem zweiten Leuchtmittel 4 zu dem ersten Leichtmittel 3 ausbreiten, mit dem ersten Leuchtmittel 3 steht.

Das erste Leuchtmittel 3 und das zweite Leuchtmittel 4 bilden somit ein Leuchtmittelpaar, welches Licht mit einer spezifischen Wellenlänge emittiert. Eine Variante der Erfindung kann vorsehen, dass mehrere Leuchtmittelpaare vorgesehen sind, die jeweils Licht mit unterschiedlicher Wellenlänge emittieren. So können bspw., um das zuvor beschriebene Beispiel wieder aufzugreifen, drei Leuchtmittelpaare vorgesehen sein, die derartig ausgebildet sind, dass ein Leuchtmittelpaar in grün, eins in gelb und wiederum eins in rot leuchten kann, um die entsprechenden Statusinformation durch die Statusanzeige zu signalisieren.

In dem Fall, dass mehrere erste Leuchtmittel 3 vorgesehen sind, können diese entweder flächig nebeneinander angeordnet sein, wie es exemplarisch in Fig. 2 dargestellt ist oder sie können übereinander angeordnet sein, wie es in Fig. 3 dargestellt ist. Fig. 2 und 3 zeigt jeweils eine solche Anordnung der Leuchtmittel in einem Gehäusedeckel mit einer Glasfront.

Selbstverständlich ist eine Kombination einer erfindungsgemäßen Statusanzeige mit einer klassischen Anzeige zur Messwertanzeige und/oder Statusanzeige möglich.

### Bezugszeichenliste

- 1: Feldgerät der Automatisierungstechnik
- 2: Gehäuse des Feldgerätes
- 3: Erstes Leuchtmittel als visuelle Statusanzeige des Feldgerätes
- 4: Zweites Leuchtmittel
- 5: Feldgeräteelektronik
- 6: Gehäusedeckel
- 7: Glasfront des Gehäusedeckels
- 8: Schwingfähige Einheit

## Patentansprüche

1. Feldgerät der Automatisierungstechnik, wenigstens umfassend:
- ein Gehäuse (2);
- ein im oder am Gehäuse (2) angeordnetes erstes Leuchtmittel (3) als visuelle Statusanzeige, welches derartig angeordnet ist, dass es von außerhalb des Gehäuses (2) sichtbar ist und welches in Form einer Leuchtfolie oder eines Leuchtlackes mit fluoreszierenden oder phosphoreszierende Eigenschaften ausgebildet ist;
- ein im Gehäuse (2) angeordnetes zweites Leuchtmittel (4), welches in dem Gehäuse (2) angeordnet und dazu eingerichtet ist, das erste Leuchtmittel (3) zum Leuchten anzuregen;
- eine im Gehäuse befindliche Feldgeräteelektronik (5), welche eingerichtet ist, das zweite Leuchtmittel (4) über ein Signal mit einer vorbestimmten Frequenz zum Leuchten anzuregen, sodass das zweite Leuchtmittel (4) das erste Leuchtmittel (3) zum Leuchten anregt und das erste Leuchtmittel nachleuchtet.

2. Feldgerät nach einem der vorherigen Ansprüche, wobei die Feldgeräteelektronik (5) ferner dazu eingerichtet ist, das Signal einer Pulsweitenmodulation zu unterziehen, sodass das pulsbreitenmodulierte Signal mit der vorbestimmten Frequenz das zweite Leuchtmittel (4) zum Leuchten anregt.

3. Feldgerät nach einem der vorherigen Ansprüche, wobei das erste Leuchtmittel (3) innerhalb des Gehäuses (2), vorzugsweise in einem dem Gehäuse zugehörigen Gehäusedeckel (6), besonders bevorzugt an einer Glasfront (7) des Gehäusedeckels (6), angeordnet ist.

4. Feldgerät nach einem der Ansprüche 1 bis 2, wobei das erste Leuchtmittel (3) außerhalb des Gehäuses (2), vorzugsweise an einem dem Gehäuse (2) zugehörigen Gehäusedeckel (6), besonders bevorzugt an einer Glasfront (7) des Gehäusedeckels (6), angeordnet ist.

5. Feldgerät nach einem der Ansprüche 1 bis 2, wobei das Gehäuse (2) einen Gehäusedeckel (6) mit einer Glasfront (7) aufweist und die Glasfront (7) derartig ausgestaltet ist, dass sie das erste Leuchtmittel (3) aufweist.

6. Feldgerät nach einem der vorherigen Ansprüche, wobei das erste Leuchtmittel (3) zumindest eine Leuchtfolie oder einen Leuchtlack umfasst.

7. Feldgerät nach einem der vorherigen Ansprüche, wobei das zweite Leuchtmittel (4) zumindest eine Leuchtdiode umfasst.

8. Feldgerät nach einem der vorherigen Ansprüche, wobei das erste Leuchtmittel (3) und das zweite Leuchtmittel (4) ein Leuchtmittelpaar (4, 4) bildet, das Licht mit einer bestimmten Wellenlänge emittieren und wobei mehrere, vorzugsweise drei, Leuchtmittelpaare vorgesehen sind, die Licht mit jeweils unterschiedlicher Wellenlänge emittieren.

9. Feldgerät nach dem vorherigen Anspruch, wobei die ersten Leuchtmittel (3) nebeneinander angeordnet sind.

10. Feldgerät nach Anspruch 8, wobei die ersten Leuchtmittel (3) übereinander angeordnet sind.

11. Verfahren zum Ansteuern eines ersten Leuchtmittels (3) als visuelle Statusanzeige eines Feldgerätes (1), welches in Form einer Leuchtfolie oder eines Leuchtlackes mit fluoreszierenden oder phosphoreszierenden Eigenschaften ausgebildet ist, wobei das Verfahren vorsieht, dass ein zweites Leuchtmittel (4), welches mit dem ersten Leuchtmittel (3) in optischen Kontakt steht, mit einer vorbestimmten Frequenz angeregt wird, sodass das erste Leuchtmittel (3) durch das zweite Leuchtmittel (4) ebenfalls zum Leuchten und Nachleuchten angeregt wird.

12. Verfahren nach Anspruch 11, wobei das zweite Leuchtmittel (4) über ein pulsbreitenmoduliertes Signal mit der vorbestimmten Frequenz angeregt wird.

## Claims

1. Field device used in automation engineering, comprising at least:
- a housing (2);
- a first light source (3) arranged in or on the housing (2) and serving as a visual status indicator, wherein said light source is arranged in such a way that it is visible from outside the housing (2) and wherein said light source is designed in the form of a luminous foil or a luminous paint with fluorescent or phosphorescent properties;
- a second light source (4) arranged in the housing (2), wherein said light source is designed to stimulate the first light source (3) so that it emits light;
- a field device electronics unit (5) located in the housing, wherein said unit is designed to stimulate - via a signal with a predefined frequency - the second light source (4) so that it emits light, such that the second light source (4) stimulates the first light source (3) to emit light and the first light source exhibits an afterglow.

2. Field device as claimed in one of the previous claims, wherein the field device electronics unit (5) is further designed to subject the signal to a pulse width modulation such that the pulse width-modulated signal stimulates the second light source (4) to emit light with the predefined frequency.

3. Field device as claimed in one of the previous claims, wherein the first light source (3) is arranged inside the housing (2), preferably in a housing cover (6) pertaining to the housing, particularly preferably on a glass front (7) of the housing cover (6).

4. Field device as claimed in one of the Claims 1 to 2, wherein the first light source (3) is arranged outside the housing (2), preferably on a housing cover (6) pertaining to the housing (2), most preferably on a glass front (7) of the housing cover (6).

5. Field device as claimed in one of the Claims 1 to 2, wherein the housing (2) has a housing cover (6) with a glass front (7) and wherein the glass front (7) is designed in such a way that it features the first light source (3).

6. Field device as claimed in one of the previous claims, wherein the first light source (3) comprises at least a luminous foil or a luminous paint.

7. Field device as claimed in one of the previous claims, wherein the second light source (4) comprises at least a light emitting diode.

8. Field device as claimed in one of the previous claims, wherein the first light source (3) and the second light source (4) form a pair of light sources (4, 4), emitting light with a defined wavelength and wherein several, preferably three, pairs of light sources are provided that each emit light with a different wavelength.

9. Field device as claimed in the previous claim, wherein the first light sources (3) are arranged beside one another.

10. Field device as claimed in Claim 8, wherein the first light sources (3) are arranged above one another.

11. Procedure to control a first light source (3) as a visual status indicator of a field device (1), said light source being designed in the form of a luminous foil or a luminous paint with fluorescent or phosphorescent properties, wherein the procedure envisages that a second light source (4), which is in optical contact with the first light source (3), is stimulated with a predefined frequency such that the first light source (3) is also stimulated by the second light source (4) to emit light and exhibit an afterglow.

12. Procedure as claimed in Claim 11, wherein the second light source (4) is stimulated via a pulse width-modulated signal with the predefined frequency.

## Revendications

1. Appareil de terrain de la technique d'automatisation, comprenant au minimum :
- un boîtier (2) ;
- une première source lumineuse (3) disposée dans ou sur le boîtier (2) et servant d'affichage d'état visuel, laquelle source lumineuse est disposée de telle sorte qu'elle soit visible de l'extérieur du boîtier (2) et laquelle source lumineuse est conçue sous la forme d'une feuille lumineuse ou d'un vernis lumineux avec des propriétés fluorescentes ou phosphorescentes ;
- une deuxième source lumineuse (4) disposée dans le boîtier (2), laquelle source lumineuse est conçue de telle sorte à stimuler la première source lumineuse (3) de manière à ce qu'elle émette de la lumière ;
- une électronique d'appareil de terrain (5) se trouvant dans le boîtier, laquelle électronique est conçue de telle sorte à stimuler, via un signal avec une fréquence prédéfinie, la deuxième source lumineuse (4) de manière à ce qu'elle émette de la lumière, si bien que la deuxième source lumineuse (4) stimule la première source lumineuse (3) de manière à ce qu'elle émette de la lumière et qu'elle présente une incandescence résiduelle.

2. Appareil de terrain selon la revendication précédente, pour lequel l'électronique d'appareil de terrain (5) est en outre conçue de telle sorte à soumettre le signal à une modulation en largeur d'impulsion, si bien que le signal modulé en largeur d'impulsion stimule la deuxième source lumineuse (4) avec la fréquence prédéfinie, de manière à ce qu'elle émette de la lumière.

3. Appareil de terrain selon l'une des revendications précédentes, pour lequel la première source lumineuse (3) est disposée à l'intérieur du boîtier (2), de préférence dans un couvercle (6) appartenant au boîtier, particulièrement de préférence sur une partie frontale en verre (7) du couvercle de boîtier (6).

4. Appareil de terrain selon l'une des revendications 1 à 2, pour lequel la première source lumineuse (3) est disposée à l'extérieur du boîtier (2), de préférence sur un couvercle (6) appartenant au boîtier, particulièrement de préférence sur une partie frontale en verre (7) du couvercle de boîtier (6).

5. Appareil de terrain selon l'une des revendications 1 à 2, pour lequel le boîtier (2) présente un couvercle de boîtier (6) avec une partie frontale en verre (7) et la partie frontale en verre (7) est conçue de telle sorte qu'elle comporte la première source lumineuse (3).

6. Appareil de terrain selon l'une des revendications précédentes, pour lequel la première source lumineuse (3) comprend au moins une feuille lumineuse ou un vernis lumineux.

7. Appareil de terrain selon l'une des revendications précédentes, pour lequel la deuxième source lumineuse (4) comprend au moins une diode électroluminescente.

8. Appareil de terrain selon l'une des revendications précédentes, pour lequel la première source lumineuse (3) et la deuxième source lumineuse (4) forment une paire de sources lumineuses (4, 4), émettent la lumière avec une longueur d'onde déterminée et
pour lequel sont prévues plusieurs, de préférence trois, paires de sources lumineuses, qui émettent de la lumière avec chacune une longueur d'onde différente.

9. Appareil de terrain selon la revendication précédente, pour lequel les premières sources lumineuses (3) sont juxtaposées.

10. Appareil de terrain selon la revendication 8, pour lequel les premières sources lumineuses (3) sont superposées.

11. Procédé destiné à la commande d'une première source lumineuse (3) en tant qu'affichage d'état visuel d'un appareil de terrain (1), laquelle source lumineuse est conçue sous la forme d'une feuille lumineuse ou d'un vernis lumineux avec des propriétés fluorescentes ou phosphorescentes, le procédé prévoyant qu'une deuxième source lumineuse, laquelle est en contact optique avec la première source lumineuse (3), est stimulée avec une fréquence prédéfinie, si bien que la première source lumineuse (3) est stimulée par la deuxième source lumineuse (4) de manière à ce qu'elle émette également de la lumière et à ce qu'elle présente une incandescence résiduelle.

12. Procédé selon la revendication 11, pour lequel la deuxième source lumineuse (4) est stimulée par le biais d'un signal modulé en largeur d'impulsion avec la fréquence prédéfinie.
